# EUROPEAN PATENT APPLICATION

(11) **EP 2 692 757 A1**
(43) Date of publication of application: **05.02.2014**
(21) Application number: 13178721.0
(22) Date of filing: 31.07.2013
(51) Int. Cl.: C08G 18/48, C08G 18/79, C08G 18/80, C08G 18/22, C09J 7/02, C09J 175/08

(54) **Surface protective film, optical member, and electronic member**

(30) Priority: 31.07.2012 JP 2012169345
(71) Applicant: NITTO DENKO CORPORATION, Ibaraki-shi, Osaka 567-8680 (JP)
(72) Inventor: Jo, Souya, Ibaraki-shi, Osaka 567-8680 (JP); Sasaki, Shogo, Ibaraki-shi, Osaka 567-8680 (JP); Iseki, Toru, Ibaraki-shi, Osaka 567-8680 (JP); Ando, Masahiko, Ibaraki-shi, Osaka 567-8680 (JP)
(74) Representative: Grünecker, Kinkeldey, Stockmair & Schwanhäusser

(57) **Abstract**

Provided is a surface protective film that uses a polyurethane-based resin in a pressure-sensitive adhesive layer, the surface protective filmbeing able to achieve both of excellent wettability, and low contamination property and adhesive residue reduction, and having excellent reworkability. Also provided are an optical member and an electronic member each having attached thereto such surface protective film. The surface protective film is a surface protective film, including: a backing layer; and a pressure-sensitive adhesive layer, in which: the pressure-sensitive adhesive layer includes a polyurethane-based resin; and the surface protective film has a pressure-sensitive adhesive strength for an acrylic plate of 0.5 N/25 mm or less after being attached to the acrylic plate and stored at 70°C for 1 day. The surface protective film is also a surface protective film, including: a backing layer; and a pressure-sensitive adhesive layer, in which: the pressure-sensitive adhesive layer includes a polyurethane-based resin; the polyurethane-based resin includes a polyurethane-based resin obtained by curing a composition including a polyol (A) having at least two OH groups and a polyfunctional isocyanate compound (B); and the polyfunctionalisocyanate compound (B) includes a polyfunctional aromatic isocyanate compound.

## Description

### BACKGROUND OF THE INVENTION

### 1. Field of the Invention

The present invention relates to a surface protective film. The surface protective film of the present invention includes a backing layer and a pressure-sensitive adhesive layer, and is preferably used in, for example, an application in which the film is attached to a surface of an optical member or an electronic member to protect the surface.

### 2. Description of the Related Art

Optical members and electronic members such as an LCD, an organic EL display, a touch panel using such display, a lens portion of a camera, and an electronic device may each have a surface protective film attached generally onto an exposed surface side thereof in order to, for example, prevent a flaw from occurring on a surface thereof upon processing, assembly, inspection, transportation, or the like. Such surface protective film is peeled from the optical member or the electronic member when the need for surface protection is eliminated.

In more and more cases, the same surface protective film is continuously used as such surface protective film, from a manufacturing step of the optical member or the electronic member, through an assembly step, an inspection step, a transportation step, and the like, until final shipping. In many of such cases, such surface protective film is attached, peeled off, and re-attached by manual work in each step.

When the surface protective film is attached by manual work, air bubbles may be trapped between an adherend and the surface protective film. Accordingly, there have been reported some technologies for improving wettability of a surface protective film so that air bubbles may not be trapped upon the attachment. For example, there is known a surface protective film that uses a silicone resin, which has a high wetting rate, in a pressure-sensitive adhesive layer. However, when the silicone resin is used in the pressure-sensitive adhesive layer, its pressure-sensitive adhesive component is liable to contaminate the adherend, resulting in a problem when the surface protective film is used for protecting a surface of a member for which particularly low contamination is required, such as the optical member or the electronic member.

As a surface protective film that causes less contamination derived from its pressure-sensitive adhesive component, there is known a surface protective film that uses an acrylic resin in a pressure-sensitive adhesive layer. However, the surface protective film that uses the acrylic resin in the pressure-sensitive adhesive layer is poor in wettability, and hence, when the surface protective film is attached by manual work, air bubbles may be trapped between the adherend and the surface protective film. In addition, when the acrylic resin is used in the pressure-sensitive adhesive layer, there is a problem in that an adhesive residue is liable to occur upon peeling, resulting in a problem when the surface protective film is used for protecting a surface of a member for which incorporation of foreign matter is particularly undesirable, such as the optical member or the electronic member.

As a surface protective film that is able to achieve both of excellent wettability, and low contamination property and adhesive residue reduction, there has recently been reported a surface protective film that uses a polyurethane-based resin in a pressure-sensitive adhesive layer (see, for example, Japanese Patent Application Laid-open No. 2006-182795).

By the way, when the surface protective film is attached to an adherend by manual work, light-peeling property is required as well as excellent wettability. This is because the surface protective film attached to an adherend is, after being peeled off, re-attached to an adherend to serve again as a surface protective film. Even with good wettability, the surface protective film deforms upon peeling of the surface protective film when the peeling is heavy, and thus the film cannot be used again as a surface protective film. In order to avoid such problem, the surface protective film to be used for an optical member or an electronic member is strongly required to have so-called reworkability of being able to be attached many times without trapping air bubbles and being able to be lightly peeled off without deforming.

However, the hitherto reported surface protective film that uses the polyurethane-based resin in the pressure-sensitive adhesive layer has a problem of poor reworkability because a pressure-sensitive adhesive strength of the pressure-sensitive adhesive layer has a high tendency to increase over time and hence peeling of the film becomes heavy after the film remains in a state of being attached to an adherend for a long period of time.

### SUMMARY OF THE INVENTION

An object of the present invention is to provide a surface protective film that uses a polyurethane-based resin in a pressure-sensitive adhesive layer, the surface protective film being able to achieve both of excellent wettability, and low contamination property and adhesive residue reduction, and having excellent reworkability. Another object of the present invention is to provide an optical member and an electronic member each having attached thereto such surface protective film.

A surface protective film of the present invention includes:
a backing layer; and
a pressure-sensitive adhesive layer,
in which:
   the pressure-sensitive adhesive layer includes a polyurethane-based resin; and
   the surface protective film has a pressure-sensitive adhesive strength for an acrylic plate of 0.5 N/25 mm or less after being attached to the acrylic plate and stored at 70°C for 1 day.

In a preferred embodiment, the polyurethane-based resin includes a polyurethane-based resin obtained by curing a composition including a polyol (A) having at least two OH groups and a polyfunctional isocyanate compound (B).

A surface protective film of the present invention includes:
a backing layer; and
a pressure-sensitive adhesive layer,
in which:
   the pressure-sensitive adhesive layer includes a polyurethane-based resin;
   the polyurethane-based resin includes a polyurethane-based resin obtained by curing a composition including a polyol (A) having at least two OH groups and a polyfunctional isocyanate compound (B); and
   the polyfunctional isocyanate compound (B) includes a polyfunctional aromatic isocyanate compound.

In a preferred embodiment, the polyol (A) includes at least two kinds of polyols.

In a preferred embodiment, at least one kind of the at least two kinds of polyols includes a polyol having at least three OH groups.

In a preferred embodiment,thesurface protective film of the present invention is used for protecting a surface of one of an optical member and an electronic member.

An optical member of the present invention has attached thereto the surface protective film of the present invention.

An electronic member of the present invention has attached thereto the surface protective film of the present invention.

### BRIEF DESCRIPTION OF THE DRAWINGS

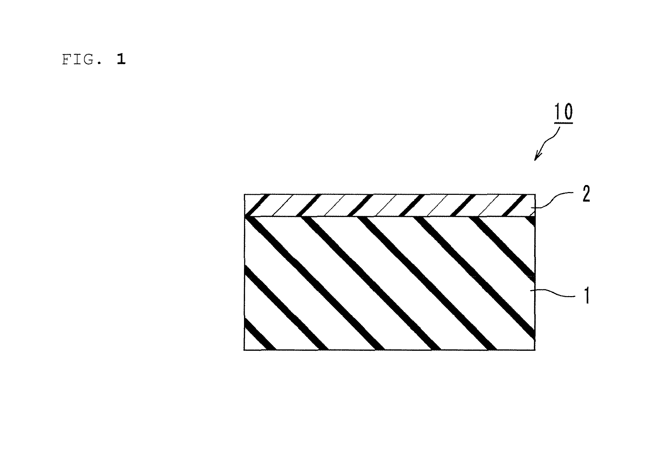

FIG. 1 is a schematic sectional view of a surface protective film according to a preferred embodiment of the present invention.

### DETAILED DESCRIPTION OF THE PREFERRED EMBODIMENTS

### «A. Surface protective film»

A surface protective film of the present invention includes a backing layer and a pressure-sensitive adhesive layer.

FIG. 1 is a schematic sectional view of a surface protective film according to a preferred embodiment of the present invention.

A surface protective film **10** includes a backing layer **1** and a pressure-sensitive adhesive layer **2.** The surface protective film of the present invention may further include any appropriate other layer as required (not shown).

For the purpose of, for example, forming a roll body that is easy to rewind, the surface of the backing layer **1** on which the pressure-sensitive adhesive layer **2** is not provided may, for example, be subjected to release treatment with the addition of a fatty acid amide-, polyethyleneimine-, or long-chain alkyl-based additive or the like, or be provided with a coat layer formed of any appropriate peeling agent such as a silicone-based, long-chain alkyl-based, or fluorine-based peeling agent.

The surface protective film of the present invention may have attached thereto a peelable liner having releasability.

The thickness of the surface protective film of the present inventionmaybe set to any appropriate thickness depending on applications. For the viewpoint of sufficiently exhibiting the effect of the present invention, the thickness of the surface protective film is preferably 10 µm to 300 µm, more preferably 15 µm to 250 µm, still more preferably 20 µm to 200 µm, particularly preferably 25 µm to 150 µm.

On the surface of the pressure-sensitive adhesive layer to be brought into contact with an adherend, the surface protective film of the present invention has a pressure-sensitive adhesive strength for an acrylic plate of preferably 0.5 N/25 mm or less, more preferably 0.005 N/25 mm to 0.5 N/25 mm, still more preferably 0.005 N/25 mm to 0.4 N/25 mm, particularly preferably 0.005 N/25 mm to 0.3 N/25 mm, most preferably 0.01 N/25 mm to 0.2 N/25 mm in terms of an initial pressure-sensitive adhesive strength immediately after the film is attached to the acrylic plate. When the initial pressure-sensitive adhesive strength falls within the range, the surface protective film of the present invention has proper initial pressure-sensitive adhesive property, and hence can exhibit additionally excellent reworkability. It should be noted that measurement of the initial pressure-sensitive adhesive strength is described later.

On the surface of the pressure-sensitive adhesive layer to be brought into contact with an adherend, the surface protective film of the present invention has a pressure-sensitive adhesive strength for an acrylic plate of preferably 0.5 N/25 mm or less, more preferably 0.005 N/25 mm to 0.5 N/25 mm, still more preferably 0.005 N/25 mm to 0.45 N/25 mm, particularly preferably 0.01 N/25 mm to 0.4 N/25 mm, most preferably 0.01 N/25 mm to 0.3 N/25 mm after being attached to the acrylic plate and stored at 70°C for 1 day. When the pressure-sensitive adhesive strength falls within the range, the surface protective film of the present invention can exhibit additionally excellent reworkability. It should be noted that measurement of the pressure-sensitive adhesive strength is described later.

The surface protective film of the present invention has excellent reworkability because the pressure-sensitive adhesive strength of the pressure-sensitive adhesive layer has a low tendency to increase over time and hence the film can be lightly peeled off even after remaining In a state of being attached to an adherend for a long period of time. Thus, when the initial pressure-sensitive adhesive strength is represented by A, and the pressure-sensitive adhesive strength after 70°Cx1 day is represented by B, the surface protective film of the present invention has a B/A of preferably less than 4, more preferably 0.8 to 3.5, still more preferably 0.9 to 3.0, particularly preferably 1.0 to 2.5, most preferably 1.0 to 2.0.

The surface protective film of the present invention preferably has high transparency. When the surface protective film of the present invention has high transparency, inspection or the like can be accurately performed under a state in which the film is attached to the surface of an optical member or an electronic member. The surface protective film of the present invention has a haze of preferably 5% or less, more preferably 4% or less, still more preferably 3% or less, particularly preferably 2% or less, most preferably 1% or less.

### <A-1. Backing layer>

Any appropriate thickness may be adopted as the thickness of the backing layer depending on applications. The thickness of the backing layer is preferably 5 µm to 300 µm, more preferably 10 µm to 250 µm, still more preferably 15 µm to 200 µm, particularly preferably 20 µm to 150 µm.

The backing layer may be a single layer, or may be a laminate of two or more layers. The backing layer may be stretched.

Any appropriate material may be adopted as a material for the backing layer depending on applications. Examples of the material include a plastic, paper, a metal film, and a nonwoven fabric. Of those, a plastic is preferred. The materials may be used alone or in combination to construct the backing layer. For example, the layer may be constructed of two or more kinds of plastics.

Examples of the plastic include a polyester-based resin, a polyamide-based resin, and a polyolefin-based resin. Examples of the polyester-based resin include polyethylene terephthalate, polybutylene terephthalate, and polyethylene naphthalate. Examples of the polyolefin-based resin include a homopolymer of an olefin monomer and a copolymer of olefin monomers. Specific examples of the polyolefin-based resin include: homopolypropylene; propylene-based copolymers such as block, random, and graft copolymers each including an ethylene component as a copolymer component; reactor TPO; ethylene-based polymers such as low density, high density, linear low density, and ultra low density polymers; and ethylene-based copolymers such as an ethylene-propylene copolymer, an ethylene-vinyl acetate copolymer, an ethylene-methyl acrylate copolymer, an ethylene-ethyl acrylate copolymer, an ethylene-butyl acrylate copolymer, an ethylene-methacrylic acid copolymer, and an ethylene-methyl methacrylate copolymer.

The backing layer may contain any appropriate additive as required. Examples of the additive that may be contained in the backing layer include an antioxidant, a UV absorbing agent, a light stabilizer, an antistatic agent, a filler, and a pigment. The kind, number, and amount of the additive that may be contained in the backing layer may be appropriately set depending on purposes. In particular, when the material for the backing layer is a plastic, it is preferred to contain some of the additives for the purpose of, for example, preventing deterioration. From the viewpoint of, for example, the improvement of weather resistance, particularly preferred examples of the additive include an antioxidant, a UV absorbing agent, a light stabilizer, and a filler.

Any appropriate antioxidant may be adopted as the antioxidant. Examples of such antioxidant include a phenol-based antioxidant, a phosphorus-based processing heat stabilizer, a lactone-based processing heat stabilizer, a sulfur-based heat stabilizer, and a phenol-phosphorus-based antioxidant. The content of the antioxidant is preferably 1 part by weight or less, more preferably 0.5 part by weight or less, still more preferably 0.01 part by weight to 0.2 part by weight with respect to 100 parts by weight of the base resin of the backing layer (when the backing layer is a blend, the blend is the base resin).

Any appropriate UV absorbing agent may be adopted as the UV absorbing agent. Examples of such UV absorbing agent include a benzotriazole-based UV absorbing agent, a triazine-based UV absorbing agent, and a benzophenone-based UV absorbing agent. The content of the UV absorbing agent is preferably 2 parts by weight or less, more preferably 1 part by weight or less, still more preferably 0.01 part by weight to 0.5 part by weight with respect to 100 parts by weight of the base resin that forms the backing layer (when the backing layer is a blend, the blend is the base resin).

Any appropriate light stabilizer may be adopted as the light stabilizer. Examples of such light stabilizer include a hindered amine-based light stabilizer and a benzoate-based light stabilizer. The content of the light stabilizer is preferably 2 parts by weight or less, more preferably 1 part by weight or less, still more preferably 0.01 part by weight to 0.5 part by weight with respect to 100 parts by weight of the base resin that forms the backing layer (when the backing layer is a blend, the blend is the base resin).

Any appropriate filler may be adopted as the filler. Examples of such filler include an inorganic filler. Specific examples of the inorganic filler include carbon black, titanium oxide, and zinc oxide. The content of the filler is preferably 20 parts by weight or less, more preferably 10 parts by weight or less, still more preferably 0.01 part by weight to 10 parts by weight with respect to 100 parts by weight of the base resin that forms the backing layer (when the backing layer is a blend, the blend is the base resin).

Further,asurfactant,aninorganicsalt,a polyhydric alcohol, a metal compound, an inorganic antistatic agent such as carbon, and low-molecular-weight and high-molecular-weight antistatic agents each intended to impart antistatic property are also preferably given as examples of the additive. Of those, a high-molecular-weight antistatic agent or carbon is particularly preferred from the viewpoints of contamination and the maintenance of pressure-sensitive adhesiveness.

### <A-2. Pressure-sensitive adhesive layer>

Any appropriate thickness may be adopted as the thickness of the pressure-sensitive adhesive layer depending on applications. The thickness of the pressure-sensitive adhesive layer is preferably 1 µm to 100 µm, more preferably 3 µm to 50 µm, still more preferably 5 µm to 30 µm.

The pressure-sensitive adhesive layer contains a polyurethane-based resin as a main component (pressure-sensitive adhesive). The content ratio of the polyurethane-based resin in the pressure-sensitive adhesive layer is preferably 90 wt% to 100 wt%, more preferably 95 wt% to 100 wt%, still more preferably 98 wt% to 100 wt%. The pressure-sensitive adhesives may be used alone or in combination.

The polyurethane-based resin is preferably obtained by curing a composition containing a polyol (A) having two or more OH groups and a polyfunctional isocyanate compound (B). When such polyurethane-based resin is adopted, there can be provided a surface protective film being able to achieve additionally great levels of both of excellent wettability, and low contamination property and adhesive residue reduction, and having additionally excellent reworkability.

The polyol (A) may contain only one kind of polyol, or may contain two or more kinds of polyols. The polyol (A) preferably contains two or more kinds of polyols. When the polyol (A) contains two or more kinds of polyols, there can be provided a surface protective film being able to achieve additionally great levels of both of excellent wettability, and low contamination property and adhesive residue reduction, and having additionally excellent reworkability.

The polyol (A) preferably contains two or more kinds of polyols. In this case, at least one kind of the two or more kinds of polyols is preferably a polyol having three or more OH groups. When such polyol (A) is adopted, there can be provided a surface protective film being able to achieve additionally great levels of both of excellent wettability, and low contamination property and adhesive residue reduction, and having additionally excellent reworkability. The polyol having three or more OH groups is preferably a polyol having three to six OH groups.

The polyol (A) contains the polyol having three or more OH groups at preferably 1 wt% to 100 wt%, more preferably 3 wt% to 100 wt%, still more preferably 5 wt% to 100 wt%, particularly preferably 10 wt% to 100 wt%, most preferably 20 wt% to 100 wt%. When such polyol (A) is adopted, there can be provided a surface protective film being able to achieve additionally great levels of both of excellent wettability, and low contamination property and adhesive residue reduction, and having additionally excellent reworkability.

When the polyol (A) contains two or more kinds of polyols, a polyol having two OH groups may be contained as at least one kind thereof.

The polyol (A) according to one of the preferred embodiments (Embodiment 1) of the present invention is in such a form that at least one kind thereof is a polyol having three or more OH groups and at least one kind thereof is a polyol having two OH groups. In Embodiment 1, the polyol having three or more OH groups is preferably a polyol having three to six OH groups.

In Embodiment 1, the polyol (A) contains the polyol having two OH groups at preferably 50 wt% to 99 wt%, more preferably 55 wt% to 97 wt%, still more preferably 60 wt% to 95 wt%, yet still more preferably 62 wt% to 90 wt%, particularly preferably 65 wt% to 80 wt%. In Embodiment 1, when such polyol (A) is adopted, there can be provided a surface protective film being able to achieve additionally great levels of both ofexcellent wettability, and low contamination property and adhesive residue reduction, and having additionally excellent reworkability.

In Embodiment 1, the polyol having two OH groups that may be contained in the polyol (A) has a number-average molecular weight (Mn) of preferably 2, 000 to 12, 000, more preferably 2, 500 to 10,000, still more preferably 3,000 to 8,000, particularly preferably 3,000 to 6,000. In Embodiment 1, when the number-average molecular weight (Mn) of the polyol having two OH groups that may be contained in the polyol (A) is adjusted within the range, there can be provided a surface protective film being able to achieve additionally great levels of both of excellent wettability, and low contamination property and adhesive residue reduction, and having additionally excellent reworkability. In Embodiment 1, when the number-average molecular weight (Mn) of the polyol having two OH groups that may be contained in the polyol (A) is excessively small, the wettability of the surface protective film to be obtained may lower. In Embodiment 1, when the number-average molecular weight (Mn) of the polyol having two OH groups that may be contained in the polyol (A) is excessively large, whitening of the surface protective film to be obtained is liable to occur, with the result that its transparency may lower.

In Embodiment 1, the polyol having three or more OH groups that may be contained in the polyol (A) has a number-average molecular weight (Mn) of preferably 400 to 3, 000, more preferably 500 to 2,500, still more preferably 600 to 2, 000. In Embodiment 1, when the number-average molecular weight (Mn) of the polyol having three or more OH groups that may be contained in the polyol (A) is adjusted within the range, there can be provided a surface protective film being able to achieve additionally great levels of both of excellent wettability, and low contamination property and adhesive residue reduction, and having additionally excellent reworkability. In Embodiment 1, when the number-average molecular weight (Mn) of the polyol having three or more OH groups that may be contained in the polyol (A) is excessively small, the wettability of the surface protective film to be obtained may lower. In Embodiment 1, when the number-average molecular weight (Mn) of the polyol having three or more OH groups that may be contained in the polyol (A) is excessively large, whitening of the surface protective film to be obtained is liable to occur, with the result that its transparency may lower.

The polyol (A) according to another of the preferred embodiments (Embodiment 2) of the present invention is in a form of being entirely formed of a polyol having three or more OH groups. In Embodiment 2, the polyol having three or more OH groups is preferably a polyol having three to six OH groups, more preferably a polyol having three or four OH groups, particularly preferably a polyol having three OH groups.

In Embodiment 2, the polyol having three OH groups that may be contained in the polyol (A) has a number-average molecular weight (Mn) of preferably 500 to 15,000, more preferably 700 to 14, 000, still more preferably 1, 000 to 13, 000, particularly preferably 1,200 to 12,000. In Embodiment 2, when the number-average molecular weight (Mn) of the polyol having three OH groups that may be contained in the polyol (A) is adjusted within the range, there can be provided a surface protective film being able to achieve additionally great levels of both of excellent wettability, and low contamination property and adhesive residue reduction, and having additionally excellent reworkability. In Embodiment 2, when the number-average molecular weight (Mn) of the polyol having three OH groups that may be contained in the polyol (A) is excessively small, the wettability of the surface protective film to be obtained may lower. In Embodiment 2, when the number-average molecular weight (Mn) of the polyol having three OH groups that may be contained in the polyol (A) is excessively large, whitening of the surface protective film to be obtained is liable to occur, with the result that its transparency may lower.

In Embodiment 2, the polyol having three OH groups that may be contained in the polyol (A) contains a polyol having a number-average molecular weight (Mn) of 5,000 to 15,000 at preferably 50 wt% to 95 wt%, more preferably 60 wt% to 90 wt%, still more preferably 65 wt% to 85 wit%. In addition, in Embodiment 2 as one of the forms in which the effects of the present invention can be particularly exhibited, the polyol having three OH groups that may be contained in the polyol (A) contains a polyol having a number-average molecular weight (Mn) of 8,000 to 12,000 at preferably 50 wt% to 95 wt%, more preferably 60 wt% to 90 wt%, still more preferably 65 wt% to 85 wt%. In Embodiment 2, when such polyol (A) is adopted, there can be provided a surface protective film being able to achieve additionally great levels of both of excellent wettability, and low contamination property and adhesive residue reduction, and having additionally excellent reworkability.

Examples of the polyol (A) include a polyester polyol, a polyether polyol, a polycaprolactone polyol, a polycarbonate polyol, and a castor oil-based polyol.

The polyester polyol can be obtained by, for example, an esterification reaction between a polyol component and an acid component.

Examples of the polyol component include ethylene glycol, diethylene glycol, 1,3-butanediol, 1,4-butanediol, neopentyl glycol, 3-methyl-1,5-pentanediol, 2-butyl-2-ethyl-1,3-propanediol, 2,4-diethyl-1,5-pentanediol, 1,2-hexanediol, 1,6-hexanediol, 1,8-octanediol, 1,9-nonanediol, 2-methyl-1,8-octanediol, 1,8-decanediol, octadecanediol, glycerin, trimethylolpropane, pentaerythritol, hexanetriol, and polypropylene glycol.

Examples of the acid component include succinic acid, methylsuccinic acid, adipic acid, pimelic acid, azelaic acid, sebacic acid, 1,12-dodecanedioic acid, 1,14-tetradecanedioic acid, dimer acid, 2-methyl-1,4-cyclohexanedicarboxylic acid, 2-ethyl-1,4-cyclohexanedicarboxylic acid, terephthalic acid, isophthalic acid, phthalic acid, isophthalic acid, terephthalic acid, 1,4-naphthalenedicarboxylic acid, 4,4'-biphenyldicarboxylic acid, and acid anhydrides thereof.

Examples of the polyether polyol include a polyether polyol obtained by subjecting an alkylene oxide such as ethylene oxide, propylene oxide, or butylene oxide to addition polymerization through the use of an initiator such as water, a low-molecular-weight polyol (such as propylene glycol, ethylene glycol, glycerin, trimethylolpropane, or pentaerythritol), a bisphenol (such as bisphenol A), or dihydroxybenzene (such as catechol, resorcin, or hydroquinone). Specific examples thereof include polyethylene glycol, polypropylene glycol, and polytetramethylene glycol.

An example of the polycaprolactone polyol is a caprolactone-type polyester diol obtained by subjecting a cyclic ester monomer such as ε-caprolactone or σ-valeralactone to ring-opening polymerization.

Examples of the polycarbonate polyol include: a polycarbonate polyol obtained by subjecting the polyol component and phosgene to a polycondensation reaction; a polycarbonate polyol obtained by subjecting the polyol component and a carbonic acid diester such as dimethyl carbonate, diethyl carbonate, dipropyl carbonate, diisopropyl carbonate, dibutyl carbonate, ethylbutyl carbonate, ethylene carbonate, propylene carbonate, diphenyl carbonate, or dibenzyl carbonate to transesterification and condensation; a copolymerized polycarbonate polyol obtained by using two or more kinds of the polyol components in combination; a polycarbonate polyol obtained by subjecting each of the various polycarbonate polyols and a carboxyl group-containing compound to an esterification reaction; a polycarbonate polyol obtained by subjecting each of the various polycarbonate polyols and a hydroxyl group-containing compound to an etherification reaction; a polycarbonate polyol obtained by subjecting each of the various polycarbonate polyols and an ester compound to a transesterification reaction; a polycarbonate polyol obtained by subjecting each of the various polycarbonate polyols and a hydroxyl group-containing compound to a transesterification reaction; a polyester-type polycarbonate polyol obtained by subjecting each of the various polycarbonate polyols and a dicarboxylic acid compound to a polycondensation reaction; and a copolymerized polyether-type polycarbonate polyol obtained by subjecting each of the various polycarbonate polyols and an alkylene oxide to copolymerization.

An example of the castor oil-based polyol is a castor oil-based polyol obtained by allowing a castor oil fatty acid and the polyol component to react with each other. A specific example thereof is a castor oil-based polyol obtained by allowing a castor oil fatty acid and polypropylene glycol to react with each other.

The polyfunctional isocyanate compounds (B) may be used alone or in combination.

Any appropriate polyfunctional isocyanate compound that may be used in a urethane-forming reaction may be adopted as the polyfunctional isocyanate compound (B). Examples of such polyfunctional isocyanate compound (B) include a polyfunctional aliphatic isocyanate compound, a polyfunctional alicyclic isocyanate compound, and a polyfunctional aromatic isocyanate compound.

Examples of the polyfunctional aliphatic isocyanate compound include trimethylene diisocyanate, tetramethylene diisocyanate, hexamethylene diisocyanate, pentamethylene diisocyanate, 1,2-propylene diisocyanate, 1,3-butylene diisocyanate, dodecamethylene diisocyanate, and 2,4,4-trimethylhexamethylene diisocyanate.

Examples of the polyfunctional alicyclic isocyanate compound include 1, 3-cyclopentene diisocyanate, 1, 3-cyclohexane diisocyanate, 1,4-cyclohexane diisocyanate, isophorone diisocyanate, hydrogenated diphenylmethane diisocyanate, hydrogenated xylylene diisocyanate, hydrogenated tolylene diisocyanate, and hydrogenated tetramethylxylylene diisocyanate.

Examples of the polyfunctional aromatic diisocyanate compound include phenylene diisocyanate, 2,4-tolylene diisocyanate, 2,6-tolylene diisocyanate, 2,2'-diphenylmethane diisocyanate, 4,4'-diphenylmethane diisocyanate, 4,4'-toluidine diisocyanate, 4,4'-diphenyl ether diisocyanate, 4,4'-diphenyl diisocyanate, 1,5-naphthalene diisocyanate, and xylylene diisocyanate.

Other examples of the polyfunctional isocyanate compound (B) include trimethylolpropane adducts of the various polyfunctional isocyanate compounds as described above, biurets thereof obtained through their reactions with water, and trimers thereof each having an isocyanurate ring. In addition, they may be used in combination.

The polyfunctional isocyanate compound (B) is preferably a polyfunctional aromatic diisocyanate compound. When the polyfunctional aromatic diisocyanate compound is adopted as the polyfunctional isocyanate compound (B), whitening of the surface protective film to be obtained can be suppressed and high transparency can be imparted thereto. When the surface protective film of the present invention has high transparency, inspection or the like can be accurately performed under a state in which the film is attached to the surface of an optical member or an electronic member.

The polyurethane-based resin is preferably obtained by curing a composition containing the polyol (A) and the polyfunctional isocyanate compound (B). Such composition may contain any appropriate other component in addition to the polyol (A) and the polyfunctional isocyanate compound (B) as long as the effects of the present invention are not impaired. Examples of such other component include a catalyst, a resin component other than the polyurethane-based resin,atackifier,aninorganic filler, an organic filler, metal powder, a pigment, a foil-shaped material, a softener, a plasticizer, an age resistor, a conductive agent, a UV absorbing agent, an antioxidant, a light stabilizer, a surface lubricating agent, a leveling agent, a corrosion inhibitor, a heat stabilizer, a polymerization inhibitor, a lubricant, and a solvent.

A weight ratio between the polyol (A) and the polyfunctional isocyanate compound (B) is preferably 10 parts by weight or more, more preferably 12 parts by weight or more, still more preferably 15 parts by weight or more, particularly preferably 20 parts by weight or more of the polyfunctional isocyanate compound (B) with respect to 100 parts by weight of the polyol (A). The upper limit value of the weight ratio of the polyfunctional isocyanate compound (B) is preferably 60 parts by weight or less, more preferably 50 parts by weight or less of the polyfunctional isocyanate compound (B) with respect to 100 parts by weight of the polyol (A). When the weight ratio between the polyol (A) and the polyfunctional isocyanate compound (B) is adjusted within the range, there can be provided a surface protective film being able to achieve additionally great levels of both of excellent wettability, and low contamination property and adhesive residue reduction,and having additionally excellent reworkability.

An equivalent ratio "NCO group/OH group" between NCO groups and OH groups in the polyol (A) and the polyfunctional isocyanate compound (B) is preferably 2.0 to 5.0, more preferably 2.0 to 4.0, still more preferably 2.0 to 3.0, particularly preferably 2.0 to 2.5. When the equivalent ratio "NCO group/OH group" is adjusted within the range, there can be provided a surface protective film being able to achieve additionally great levels of both of excellent wettability, and low contamination property and adhesive residue reduction, and having additionally excellent reworkability.

Any appropriate method such as a urethane-forming reaction method involving using bulk polymerization, solution polymerization, or the like may be adopted as a method of obtaining the polyurethane-based resin by curing the composition containing the polyol (A) and the polyfunctional isocyanate compound (B) as long as the effects of the present invention are not impaired.

In order to cure the composition containing the polyol (A) and the polyfunctional isocyanate compound (B), a catalyst is preferably used. Examples of such catalyst include an organometallic compound and a tertiary amine compound.

Examples of the organometallic compound may include an iron-based compound, a tin-based compound, a titanium-based compound, a zirconium-based compound, a lead-based compound, a cobalt-based compound, and a zinc-based compound. Of those, an iron-based compound is preferred from the viewpoints of a reaction rate and the pot life of the pressure-sensitive adhesive layer.

Examples of the iron-based compound include iron acetylacetonate and iron 2-ethylhexanoate.

Examples of the tin-based compound include dibutyltin dichloride, dibutyltin oxide, dibutyltin dibromide, dibutyltin maleate, dibutyltin dilaurate, dibutyltin diacetate, dibutyltin sulfide, tributyltinmethoxide, tributyltinacetate, triethyltin ethoxide, tributyltin ethoxide, dioctyltin oxide, dioctyltin dilaurate, tributyltin chloride, tributyltin trichloroacetate, and tin 2-ethylhexanoate.

Examples of the titanium-based compound include dibutyltitanium dichloride, tetrabutyl titanate, and butoxytitanium trichloride.

Examples of the zirconium-based compound include zirconium naphthenate and zirconium acetylacetonate.

Examples of the lead-based compound include lead oleate, lead 2-ethylhexanoate, lead benzoate, and lead naphthenate.

Examples of the cobalt-based compound include cobalt 2-ethylhexanoate and cobalt benzoate.

Examples of the zinc-based compound include zinc naphthenate and zinc 2-ethylhexanoate.

Examples of the tertiary amine compound include triethylamine, triethylenediamine, and 1,8-diazabicyclo[5.4.0]undec-7-ene.

The catalysts may be used alone or in combination. In addition, the catalyst may be used in combination with a cross-linking retardant or the like. The amount of the catalyst is preferably 0.001 part by weight to 0.10 part by weight, more preferably 0.005 part by weight to 0.08 part by weight, still more preferably 0.01 part by weight to 0.07 part by weight, particularly preferably 0. 02 part by weight to 0.06 part by weight with respect to 100 parts by weight of the polyol (A). When the amount of the catalyst is adjusted within the range, there can be provided a surface protective film being able to achieve additionally great levels of both of excellent wettability, and low contamination property and adhesive residue reduction, and having additionally excellent reworkability.

The pressure-sensitive adhesive layer may contain any appropriate other component in addition to the polyurethane-based resin as described above as long as the effects of the present invention are not impaired. Examples of such other component include a resin component other than the polyurethane-based resin, a tackifier, an inorganic filler, an organic filler, metal powder, a pigment, a foil-shaped material, a softener, a plasticizer, an age resistor, a conductive agent, a UV absorbing agent, an antioxidant, a light stabilizer, a surface lubricating agent, a leveling agent, a corrosion inhibitor, a heat stabilizer, a polymerization inhibitor, a lubricant, and a solvent.

The pressure-sensitive adhesive layer may be manufactured by any appropriate manufacturing method. An example of such manufacturing method is a method involving applying a composition that is a material for forming the pressure-sensitive adhesive layer onto the backing layer to form the pressure-sensitive adhesive layer on the backing layer. Examples of such application method include roll coating, gravure coating, reverse coating, roll brushing, spray coating, air knife coating, and extrusion coating with a die coater.

### <A-3. Application>

The surface protective film of the present invention may be used in any appropriate application. The surface protective film of the present invention is preferably used for the protection of the surface of an optical member or an electronic member.

The optical member having attached thereto the surface protective film of the present invention can be subjected to attaching and peeling processes by manual work many times.

The electronic member having attached thereto the surface protective film of the present invention can be subjected to attaching and peeling processes by manual work many times.

### «B. Method of manufacturing surface protective film»

The surface protective film of the present invention may be manufactured by any appropriate method. Such manufacturing method may be performed in conformity with any appropriate manufacturing method such as:
(1) a method involving applying a solution or heat-melt of a material for forming the pressure-sensitive adhesive layer (e.g., a composition containing a polyurethane-based resin) onto the backing layer;
(2) a method in accordance with the method (1) involving applying the solution or heat-melt onto a separator, and transferring the formed pressure-sensitive adhesive layer onto the backing layer;
(3) a method involving extruding a material for forming the pressure-sensitive adhesive layer onto the backing layer, and forming the layer by application;
(4) a method involving extruding the backing layer and the pressure-sensitive adhesive layer in two or more layers;
(5) a method involving laminating the backing layer with a single layer, i.e., the pressure-sensitive adhesive layer or a method involving laminating the backing layer with two layers, i.e., the pressure-sensitive adhesive layer and a laminate layer; or
(6) a method involving forming the pressure-sensitive adhesive layer and a material for forming the backing layer such as a film or a laminate layer into a laminate of two or more layers.

### Examples

Hereinafter, the present invention is described specifically by way of Examples. However, the present invention is by no means limited to Examples. It should be noted that test and evaluation methods in Examples and the like are as described below. It should be noted that the term "part (s) " in the following descriptionmeans "part (s) byweight" unless otherwise specified, and the term "%" in the following description means "wt%" unless otherwise specified.

### <Evaluation of wettability>

A surface protective film was cut into a size of 2.5 cm×10.0 cm to produce a test piece. The test piece was attached to an acrylic plate (manufactured by MITSUBISHI RAYON CO., LTD., trade name: ACRYLITE L) by manual work at a speed of 10 m/min, and the presence or absence of an air bubble between the test piece and the acrylic plate was confirmed. Evaluation was made in accordance with the following criteria.
○: No air bubble is present.
× : A large number of air bubbles are trapped, and the air bubbles cannot be easily removed.

### <Evaluation of scale of occurrence of adhesive residue>

The surface of a pressure-sensitive adhesive layer was scratched with the tip of a pen, and it was determined by visual observation whether or not the pressure-sensitive adhesive layer was chipped. The visual observation was performed under a fluorescent lamp. When the pressure-sensitive adhesive layer is not chipped, an adhesive residue does not occur, and when the pressure-sensitive adhesivelayerischipped, an adhesive residue occurs. Evaluation was made in accordance with the following criteria.
○: No occurrence of an adhesive residue was observed.
×: Occurrence of an adhesive residue was observed.

### <Evaluation of scale of adherend contamination property>

The surface of an acrylic plate after measurement of a pressure-sensitive adhesive strength was checked by visual observation under a three band fluorescent lamp, to thereby determine adherend contamination property. Evaluation was made in accordance with the following criteria.
○: No contamination of the adherend was observed.
×: Contamination of the adherend was observed.

### <Measurement of initial pressure-sensitive adhesive strength for acrylic plate>

A surface protective film was cut into a size of 25 mm wide by 150 mm long to produce a sample for evaluation.
Under an atmosphere having a temperature of 23°C and a humidity of 50%RH, the pressure-sensitive adhesive layer surface of the sample for evaluation was attached to an acrylic plate (manufactured by MITSUBISHI RAYON CO., LTD., trade name: ACRYLITE L) by moving a 2.0-kg roller from one end to the other and back. The resultant was cured under an atmosphere having a temperature of 23°C and a humidity of 50%RH for 30 minutes, and was then measured for its pressure-sensitive adhesive strength by being peeled off at a peel angle of 180° and a rate of pulling of 300 mm/min with a universal tensile tester (manufactured by Minebea Co., Ltd., product name: TCM-1kNB).

### <Measurement of pressure-sensitive adhesive strength for acrylic plate after 70°Cx1 day>

A sample for evaluation was produced by the same method as that for the initial pressure-sensitive adhesive strength for an acrylic plate, and was measured for its pressure-sensitive adhesive strength after storage at 70°C for 1 day by the same method as that for the initial pressure-sensitive adhesive strength.

### <Evaluation of reworkability>

Reworkability was evaluated in accordance with the following criteria.
○: The pressure-sensitive adhesive strength after 70°C×1 day for an acrylic plate is 0.5 N/25 mm or less.
×: The pressure-sensitive adhesive strength after 70°Cx1 day for an acrylic plate is more than 0.5 N/25 mm.

### <Evaluation of transparency>

A haze was calculated through the use of a haze meter HM-150 (manufactured by MURAKAMI COLOR RESEARCH LABORATORY CO., LTD.) in conformity with JIS-K-7136 on the basis of following equation: haze (%)=(Td/Tt) ×100 (Td: diffuse transmittance, Tt: total light transmittance). Transparency was evaluated in accordance with the following criteria.
○: The haze is 4% or less.
Δ: The haze is more than 4% and 5% or less.
×: The haze is more than 5%.

### <Evaluation of deformation of surface protective film>

The surface protective film peeled off after the measurement of the pressure-sensitive adhesive strength after 70°C×1 day for an acrylic plate was placed at rest on a flat table, and the degree of deformation at an end portion of the surface protective film was observed. Deformation of the surface protective film was evaluated in accordance with the following criteria.
○: Curling of the film did not occur.
×: Curling of the film occurred.

### (Example 1)

70 Parts by weight of SANNIX PP4000 (polyol having two OH groups manufactured by Sanyo Chemical Industries, Ltd., Mn=4, 000), 20 parts by weight of SANNIX GP-1500 (polyol having three OH groups manufactured by Sanyo Chemical Industries, Ltd., Mn=1,500), and 10 parts by weight of EDP-1100 (polyol having four OH groups manufactured by ADEKA CORPORATION, Mn=1,100) as the polyol (A), 40 parts by weight of a trimethylolpropane/tolylene diisocyanate trimer adduct (manufactured by Nippon Polyurethane Industry Co. , Ltd., trade name: CORONATE L) as the polyfunctional isocyanate compound (B), 0.04 part by weight of a catalyst (manufactured by NIHON KAGAKU SANGYO CO., LTD., trade name: Nacem Ferric Iron), and 266 parts by weight of ethyl acetate as a dilution solvent were blended, and the mixture was stirred with a disper to provide a urethane-based pressure-sensitive adhesive composition. The resultant urethane-based pressure-sensitive adhesive composition was applied with a fountain roll onto "Lumirror S10" (thickness: 38 µm, manufactured by Toray Industries, Inc.) as a backing made of a polyester resin so as to have a thickness after drying of 12 µm, and was cured and dried under the conditions of a drying temperature of 130°C and a drying time of 2 minutes.
Next, to the surface of the pressure-sensitive adhesive layer was attached the silicone-treated surface of a backing made of a polyester resin and having a thickness of 25 µm one surface of which had been subj ected to silicone treatment. Thus, a surface protective film (1) was obtained.
Table 1 shows evaluation results.

### (Example 2)

A surface protective film (2) was obtained in the same manner as in Example 1 except that: 70 parts by weight of PREMINOL S 4006 (polyol having two OH groups manufactured by ASAHI GLASS CO., LTD., Mn=5,500) and 30 parts by weight of EDP-1100 (polyol having four OH groupsmanufacturedbyADEKA CORPORATION, Mn=1, 100) were used as the polyol (A) ; the use amount of the polyfunctional isocyanate compound (B) was changed to 30 parts by weight; and the use amount of the catalyst was changed to 0.10 part by weight.
Table 1 shows evaluation results.

### (Example 3)

A surface protective film (3) was obtained in the same manner as in Example 1 except that: 70 parts by weight of PREMINOL S 4006 (polyol having two OH groups manufactured by ASAHI GLASS CO., LTD., Mn=5,500), 20 parts by weight of SANNIX GP-1500 (polyol having three OH groups manufactured by Sanyo Chemical Industries, Mn=1, 500), and 10 parts by weight of SANNIX SP-750 (polyol having six OH groups manufactured by Sanyo Chemical Industries, Mn=700) were used as the polyol (A) ; the use amount of the polyfunctional isocyanate compound (B) was changed to 30 parts by weight; and the use amount of the catalyst was changed to 0.10 part by weight.
Table 1 shows evaluation results.

### (Example 4)

A surface protective film (4) was obtained in the same manner as in Example 1 except that: 70 parts by weight of PREMINOL S 4006 (polyol having two OH groups manufactured by ASAHI GLASS CO., LTD. , Mn=5,500), 20 parts by weight of SANNIX GP-1500 (polyol having three OH groups manufactured by Sanyo Chemical Industries, Mn=1,500), and 10 parts by weight of EDP-1100 (polyol having four OH groups manufactured by ADEKA CORPORATION, Mn=1, 100) were used as the polyol (A) ; the use amount of the polyfunctional isocyanate compound (B) was changed to 33 parts by weight; and the use amount of the catalyst was changed to 0.10 part by weight.
Table 1 shows evaluation results.

### (Example 5)

A surface protective film (5) was obtained in the same manner as in Example 1 except that: 70 parts by weight of PREMINOL S 4011 (polyol having two OH groups manufactured by ASAHI GLASS CO., LTD., Mn=10,000), 25 parts by weight of SANNIXGP-1500 (polyol having three OH groups manufactured by Sanyo Chemical Industries, Mn=1, 500), and 5 parts by weight of EDP-1100 (polyol having four OH groups manufactured by ADEKA CORPORATION, Mn=1, 100) were used as the polyol (A) ; the use amount of the polyfunctional isocyanate compound (B) was changed to 30 parts by weight; and the use amount of the catalyst was changed to 0.20 part by weight.
Table 1 shows evaluation results.

### (Example 6)

A surface protective film (6) was obtained in the same manner as in Example 1 except that: 70 parts by weight of PREMINOL S 4008 (polyol having two OH groups manufactured by ASAHI GLASS CO., LTD. , Mn=8,000), 25 parts by weight of SANNIX GP-1500 (polyol having three OH groups manufactured by Sanyo Chemical Industries, Mn=1,500), and 5 parts by weight of EDP-1100 (polyol having four OH groups manufactured by ADEKA CORPORATION, Mn=1, 100) were used as the polyol (A) ; the use amount of the polyfunctional isocyanate compound (B) was changed to 30 parts by weight; and the use amount of the catalyst was changed to 0.10 part by weight.
Table 1 shows evaluation results.

### (Example 7)

A surface protective film (7) was obtained in the same manner as in Example 1 except that: 70 parts by weight of PREMINOL S 4011 (polyol having two OH groups manufactured by ASAHI GLASS CO., LTD., Mn=10,000), 25 parts by weight of SANNIX GP-1500 (polyol having three OH groups manufactured by Sanyo Chemical Industries, Mn=1,500), and 5 parts by weight of SANNIX SP-750 (polyol having six OH groups manufactured by Sanyo Chemical Industries, Mn=700) were used as the polyol (A) ; the use amount of the polyfunctional isocyanate compound (B) was changed to 30 parts by weight; and the use amount of the catalyst was changed to 0.10 part by weight.
Table 1 shows evaluation results.

### (Example 8)

A surface protective film (8) was obtained in the same manner as in Example 1 except that: 70 parts by weight of PREMINOL S 4011 (polyol having two OH groups manufactured by ASAHI GLASS CO., LTD., Mn=10,000), 20 parts by weight of SANNIX GP-1500 (polyol having three OH groups manufactured by Sanyo Chemical Industries, Ltd., Mn=1,500), and 10 parts by weight of SANNIX SP-750 (polyol having six OH groups manufactured by Sanyo Chemical Industries, Ltd., Mn=700) were used as the polyol (A); 25 parts by weight of CORONATE HX (polyfunctional alicyclic isocyanate compound, Nippon Polyurethane Industry Co., Ltd.) were used as the polyfunctional isocyanate compound (B); and the use amount of the catalyst was changed to 0.20 part by weight.
Table 1 shows evaluation results.

### (Example 9)

A surface protective film (9) was obtained in the same manner as in Example 1 except that: 80 parts by weight of PREMINOL S 3011 (polyol having three OH groups manufactured by ASAHI GLASS CO., LTD. , Mn=10,000), 15 parts by weight of SANNIX GP-3000 (polyol having three OH groups manufactured by Sanyo Chemical Industries, Ltd., Mn=3,000), and 5 parts by weight of SANNIX GP-1500 (polyol having three OH groups manufactured by Sanyo Chemical Industries, Ltd. , Mn=1, 500) were used as the polyol (A) ; and 25 parts by weight of CORONATE HX (polyfunctional alicyclic isocyanate compound, Nippon Polyurethane Industry Co., Ltd.) were used as the polyfunctional isocyanate compound (B).
Table 1 shows evaluation results.

### (Example 10)

A surface protective film (10) was obtained in the same manner as in Example 1 except that: 80 parts by weight of PREMINOL S 3011 (polyol having three OH groups manufactured by ASAHI GLASS CO., LTD., Mn=10,000) and 20 parts by weight of SANNIX GP-1500 (polyol having three OH groups manufactured by Sanyo Chemical Industries, Ltd., Mn=1,500) were used as the polyol (A); and 25 parts by weight of CORONATE HX (polyfunctional alicyclic isocyanate compound, Nippon Polyurethane Industry Co., Ltd.) were used as the polyfunctional isocyanate compound (B).
Table 1 shows evaluation results.

### (Comparative Example 1)

A surface protective film (C1) was obtained in the same manner as in Example 1 except that: 70 parts by weight of PREMINOL S 4006 (polyol having two OH groups manufactured by ASAHI GLASS CO., LTD., Mn=5,500) and 30 parts by weight of SANNIX GP-1500 (polyol having three OH groups manufactured by Sanyo Chemical Industries, Ltd., Mn=1,500) were used as the polyol (A); the use amount of the polyfunctional isocyanate compound (B) was changed to 30 parts by weight; and the use amount of the catalyst was changed to 0.10 part by weight.
Table 1 shows evaluation results.

**Table 1**

| | | Mn | Number of functional groups | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|---|---|---|
| polyol (A) | S4011 | 10,000 | 2 | - | - | - | - | 70 | - | 70 | 70 | - | - | - |
| | S4008 | 8,000 | 2 | - | - | - | - | - | 70 | - | - | - | - | - |
| | S4006 | 5,500 | 2 | - | 70 | 70 | 70 | - | - | - | - | - | - | 70 |
| | PP-4000 | 4,000 | 2 | 70 | - | - | - | - | - | - | - | - | - | - |
| | S3011 | 10,000 | 3 | - | - | - | - | - | - | - | - | 80 | 80 | |
| | GP-3000 | 3,000 | 3 | - | - | - | - | - | - | - | - | 15 | - | |
| | GP-1500 | 1,500 | 3 | 20 | - | 20 | 20 | 25 | 25 | 25 | 20 | 5 | 20 | 30 |
| | EDP-1100 | 1,100 | 4 | 10 | 30 | - | 10 | 5 | 5 | - | - | - | - | - |
| | SP-750 | 700 | 6 | - | - | 10 | - | - | - | 5 | 10 | - | - | - |
| Poly functional isocyanate compound (B) | CORONATE L | - | 3 | 40 | 30 | 30 | 33 | 30 | 30 | 30 | - | - | - | 30 |
| | CORONATE HX | - | 3 | - | - | - | - | - | - | - | 25 | 25 | 25 | - |
| Catalyst | | | | 0.04 | 0.10 | 0.10 | 0.10 | 0.20 | 0.10 | 0.10 | 0.20 | 0.04 | 0.04 | 0.10 |
| Pressure-sensitive adhesive strength for acrylic plate (N/25 mm) | | Initial | | 0.04 | 0.09 | 0.13 | 0.01 | 0.06 | 0.08 | 0.05 | 0.04 | 0.06 | 0.05 | 0. 64 |
| | | 70°C×1 day | | 0.05 | 0.15 | 0.23 | 0.02 | 0.12 | 0.07 | 0.14 | 0.06 | 0.09 | 0.09 | 2.57 |
| Reworkability | | | | ○ | ○ | ○ | ○ | ○ | ○ | ○ | ○ | ○ | ○ | × |
| Wettability | | | | ○ | ○ | ○ | ○ | ○ | ○ | ○ | ○ | ○ | ○ | ○ |
| Scale of occurrence of adhesive residue | | | | ○ | ○ | ○ | ○ | ○ | ○ | ○ | ○ | ○ | ○ | ○ |
| Adherend contamination property | | | | ○ | ○ | ○ | ○ | ○ | ○ | ○ | ○ | ○ | ○ | ○ |
| Transparency | | | | ○ | ○ | ○ | ○ | ○ | ○ | Δ | Δ | ○ | ○ | ○ |
| Deformation of surface protective film | | | | ○ | ○ | ○ | ○ | ○ | ○ | ○ | ○ | ○ | ○ | × |

### (Example 11)

The surface protective film (1) obtained in Example 1 was attached to a polarizing plate (manufactured by NITTO DENKO CORPORATION, trade name: "TEG1465DUHC") as an optical member, to thereby provide an optical member having attached thereto a surface protective film.

### (Example 12)

The surface protective film (1) obtained in Example 1 was attached to a conductive film (manufactured by NITTO DENKO CORPORATION, trade name: "ELECRYSTAV270L-TFMP") as an electronic member, to thereby provide an electronic member having attached thereto a surface protective film.

The surface protective film of the present invention can be used in, for example, an application in which the film is attached to the surface of an optical member or an electronic member to protect the surface.

According to one embodiment of the present invention, it is possible to provide the surface protective film that uses a polyurethane-based resin in a pressure-sensitive adhesive layer, the surface protective film being able to achieve both of excellent wettability, and low contamination property and adhesive residue reduction, and having excellent reworkability. In addition, it is possible to provide the optical member and electronic member each having attached thereto such surface protective film.

## Claims

1. A surface protective film, comprising:
a backing layer; and
a pressure-sensitive adhesive layer,
wherein:
the pressure-sensitive adhesive layer comprises a polyurethane-based resin; and
the surface protective film has a pressure-sensitive adhesive strength for an acrylic plate of 0.5 N/25 mm or less after being attached to the acrylic plate and stored at 70°C for 1 day.

2. A surface protective film according to claim 1, wherein the polyurethane-based resin comprises a polyurethane-based resin obtained by curing a composition comprising a polyol (A) having at least two OH groups and a polyfunctional isocyanate compound (B).

3. A surface protective film, comprising:
a backing layer; and
a pressure-sensitive adhesive layer,
wherein:
the pressure-sensitive adhesive layer comprises a polyurethane-based resin;
the polyurethane-based resin comprises a polyurethane-based resin obtained by curing a composition comprising a polyol (A) having at least two OH groups and a polyfunctional isocyanate compound (B); and
the polyfunctional isocyanate compound (B) comprises a polyfunctional aromatic isocyanate compound.

4. A surface protective film according to claim 2 or 3, wherein the polyol (A) comprises at least two kinds of polyols.

5. A surface protective film according to claim 4, wherein at least one kind of the at least two kinds of polyols comprises a polyol having at least three OH groups.

6. A surface protective film according to any one of claims 1 to 5, wherein the surface protective film is used for protecting a surface of one of an optical member and an electronic member.

7. An optical member, having attached thereto the surface protective film according to any one of claims 1 to 5.

8. An electronic member, having attached thereto the surface protective film according to any one of claims 1 to 5.
